(19) **Europäisches Patentamt**

**European Patent Office**

**Office européen des brevets**

(11) **EP 0 626 075 B1**

(12) **EUROPÄISCHE PATENTSCHRIFT**

(45) Veröffentlichungstag und Bekanntmachung des Hinweises auf die Patenterteilung:
**28.06.2000 Patentblatt 2000/26**

(51) Int. Cl.[7]: **G02C 7/02**

(21) Anmeldenummer: **94901756.0**

(22) Anmeldetag: **14.12.1993**

(86) Internationale Anmeldenummer:
**PCT/DE93/01194**

(87) Internationale Veröffentlichungsnummer:
**WO 94/14100 (23.06.1994 Gazette 1994/14)**

(54) **BRILLENGLAS MIT ASTIGMATISCHER WIRKUNG**

SPECTACLE LENS WITH ASTIGMATIC EFFECT

VERRE DE LUNETTES A EFFET ASTIGMATIQUE

(84) Benannte Vertragsstaaten:
**AT CH DE ES FR GB IT LI NL SE**

(30) Priorität: **15.12.1992 DE 4242267**

(43) Veröffentlichungstag der Anmeldung:
**30.11.1994 Patentblatt 1994/48**

(73) Patentinhaber:
**Optische Werke G. Rodenstock**
**80469 München (DE)**

(72) Erfinder:
• **GUILINO, Günther**
  **D-81476 München (DE)**

• **PFEIFFER, Herbert**
  **D-81247 München (DE)**
• **ALTHEIMER, Helmut**
  **D-80469 München (DE)**
• **BARTH, Rudolf**
  **D-85256 Vierkirchen (DE)**

(74) Vertreter:
**Münich, Wilhelm, Dr. et al**
**Dr. Münich & Kollegen**
**Anwaltskanzlei**
**Wilhelm-Mayr-Str. 11**
**80689 München (DE)**

(56) Entgegenhaltungen:
**EP-A- 0 039 498          FR-A- 2 623 921**

**Beschreibung**

**Technisches Gebiet**

Die Erfindung bezieht sich auf ein Brillenglas mit astigmatischer Wirkung, bei dem sich zusätzlich der Brechwert ändert, um Sehen in unterschiedlichen Entfernungen ohne oder mit nur geringer Akkommodation zu ermöglichen, sowie auf ein Verfahren zur Berechnung eines derartigen Brillenglases.

**Stand der Technik**

Progressive Brillengläser, d.h. Brillengläser, bei denen der Brechwert von einem für das Sehen in die Ferne geeigneten Wert innerhalb eines entsprechenden Bereichs auf dem Brillenglas kontinuierlich über die sog. Progressionszone bis zu einem für das Sehen in die Nähe geeigneten Wert in einem entsprechenden Bereich auf dem Brillenglas ansteigt, sind seit langem bekannt und in den verschiedensten Ausbildungen verfügbar. Nur exemplarisch wird bzgl. der Ausbildung progressiver Flächen auf die US-PS 2 878 721 oder die DE-PSen 20 44 639, 28 14 916 und 30 16 935 verwiesen.

Ferner sind die verschiedensten "Spezial-Flächen" bekannt, bei denen die Form und Anordnung der für das Sehen in bestimmte Entfernungen geeigneten Bereiche für spezielle Anwendungsfälle, beispielsweise die Arbeit im Cockpit eines Flugzeugs oder an einem Bildschirmarbeitsplatz optimiert sind.

Diese Brillengläser bzw. die entsprechend ausgebildeten Brillenglas-Flächen werden im folgenden unabhängig von der Zahl und Anordnung der einzelnen Sehbereiche als progressive Brillengläser bzw. als progressive Flächen bezeichnet.

Nun ist es immer dann, wenn der Brillenträger nicht nur presbyop ist, sondern zusätzlich auf einem oder beiden Augen einen sog. astigmatischen Sehfehler (Zylinderfehler) hat, erforderlich, das jeweilige Brillenglas mit progressiv ansteigender Wirkung zusätzlich mit einer astigmatischen Wirkung bzw. einer Zylinderwirkung zu versehen.

Dies geschieht herkömmlicherweise dadurch, daß die zweite Fläche eine torische Fläche ist. Die zweite Fläche wird deshalb auch als Rezeptfläche bezeichnet, da mit ihr die Einstellung des für die Sehfehler-Korrektion erforderlichen sphärischen Brechwertes, der Zylinderwirkung und der Zylinderachse erfolgt. Zur Kompensation unterschiedlicher Achslagen des Zylinderfehlers des Auges ist es dabei erforderlich, die Achse des Torus entsprechend gegenüber der progressiven Fläche zu "verdrehen".

Aus Fertigungsgründen werden für die Flächen mit astigmatischer Wirkung in der Regel torische Flächen verwendet. Eine torische Fläche entsteht durch die Rotation eines Kreises um eine in der Ebene des Kreises liegende, aber nicht durch seinen Mittelpunkt verlaufende Achse. Die beiden Hauptschnitte sind somit Kreise, deren Radius sich entsprechend der gewünschten astigmatischen Wirkung unterscheidet.

Ferner sind verschiedentlich Flächen mit astigmatischer Wirkung vorgeschlagen worden, bei denen die beiden Hauptschnitte eine von der Kreisform abweichende Form haben. Hierzu wird auf die DE-A 18 05 561, die EP-A 0 039 598 oder den Sonderdruck eines Vortrags von B. Maitenaz in Grenoble aus dem Jahre 1969 mit dem Titel "Verres progressifs pour aphaques" verwiesen.

Dabei ist insbesondere die in der EP-A 0 039 498 beschriebene Fläche mit astigmatischer Wirkung so aufgebaut, daß der Astigmatismus der Brillenlinse nicht nur bzgl. Betrag, sondern auch bezüglich Achslage des zu korrigierenden Auges optimal angepaßt sein soll. Anders ausgedrückt vermittelt diese Druckschrift die Lehre, für jede Zylinderachse und jede Zylinderwirkung eine spezielle Fläche zu berechnen.

Eine derartige Vorgehensweise mag immer dann, wenn die Brillenlinse ausschließlich eine astigmatische Wirkung haben soll, noch realisierbar sein. Soll die Fläche mit astigmatischer Wirkung jedoch mit einer Fläche mit kontinuierlicher Brechwertänderung kombiniert werden, würde die große Zahl der dann entstehenden Kombinationsmöglichkeiten von Basiskurven und Additionen der progressiven Fläche mit den vorkommenden Zylinderwirkungen und Zylinderachsen der astigmatischen Fläche einen wirtschaftlich nicht vertretbaren Aufwand bedeuten, um für jede progressive Fläche und jede Zylinderwirkung und Achslage eine eigene Fläche mit astigmatischer Wirkung zu berechnen und zu fertigen.

**Darstellung der Erfindung**

Der Erfindung liegt die Aufgabe zugrunde ein Brillenglas mit progressiver und astigmatischer Wirkung anzugeben, bei dem für progressive Flächen insbesondere mit gleicher Fernteilgestaltung (i.e. Basiskurve mit verschiedenen Additionen) und gegebener astigmatischer Wirkung eine Sehverbesserung im Vergleich zu den bekannten torischen Ausführungen erzielt wird, und zwar unabhängig von der verordneten Achslage. Ferner soll ein Verfahren zur Berechnung eines Brillenglases augegeben werden.

Erfindungsgemäße Lösungen sind in den Patentansprüchen 1 bzw. 5 angegeben. Weiterbildungen der Erfindung sind Gegenstand der Unteransprüche.

Erfindungsgemäß weist die Fläche mit astigmatischer Wirkung in an sich bekannter Weise eine von der (klassischen) torischen Form abweichende Gestalt auf. Die hierdurch gegebenen Optimierungsmöglichkeiten erlauben es, ein Brillenglas zu realisieren, das einen wesentlich größeren Bereich für das deutliche Sehen als progressive Brillengläser mit torischer Rezeptfläche aufweist.

Weiterhin ist die bei dem erfindungsgemäß aufgebauten Brillenglas als "Rezeptfläche" verwendete Fläche mit astigmatischer Wirkung so berechnet, daß ihre Schnitte für eine bestimmte Fläche mit kontinuierlicher Brechwert-Änderung, d.h. für eine bestimmte progressive Fläche unabhängig von der Orientierung der Fläche mit astigmatischer Wirkung relativ zur Fläche mit kontinuierlicher Brechwert-Änderung für die Achslage 0° optimiert sind. Durch diese Vorgehensweise erhält man überraschenderweise Flächen, die auch in der Stellung 90° der "Zylinderachse" relativ zur progressiven Fläche sowie sämtlichen Zwischenstellungen einen für klares Sehen geeigneten Bereich aufweisen, der gegenüber Brillengläser mit torischer Rezeptfläche wesentlich vergrößert ist. Dies ist deshalb besonders überraschend, da man eigentlich erwarten würde, daß die Optimierung für eine schräge Achslage und insbesondere für die Achslage 45° bessere Ergebnisse als die Optimierung für die Achslage 0° liefern würde.

Vor allem aber hat sich herausgestellt, daß es bei Verwendung einer erfindungsgemäß aufgebauten Fläche mit astigmatischer Wirkung, die für die Achslage 0° optimiert ist, in den Achslagen 45° und 90° sowie den Zwischenlagen der für das klare Sehen verwendbare Bereich nur geringfügig gegenüber Brillengläsern verringert ist, bei denen die astigmatische Fläche für die jeweilige Achslage optimiert ist.

Weiterbildungen der Erfindung sind in den abhängigen Ansprüchen angegeben.

Eine besonders vorteilhafte Ausführungsform ist im Anspruch 2 gekennzeichnet:

Gemäß dieser Ausführungsform hat kein Schnitt der Fläche mit astigmatischer Wirkung, der durch den Scheitelpunkt verläuft, eine kreisförmige Form. Hierdurch erhält man gegenüber einem Brillenglas, bei dem nurein einziger Hauptschnitt eine von der Kreisform abweichende Form hat, oder bei dem lediglich der Zwischenbereich zwischen den Hauptschnitten gegenüber einem torischen Glas variiert wird, wesentlich mehr Optimierungsspielraum. Insbesondere ist es möglich, die Fläche mit astigmatischer Wirkung über einen größeren Bereich der Blickauslenkung zu optimieren.

Die Optimierung kann dabei nach Anspruch 6 für zwei Blickkegel erfolgen, von denen einer einer Blickauslenkung von ca. 15° bis 20° und der andere einer Blickauslenkung von ca. 30° bis 40° entspricht (Anspruch 7).

Dabei ist es besonders vorteilhaft, daß bei der Kombination einer erfindungsgemäß gewählten Fläche mit astigmatischer Wirkung mit einem herkömmlichen progressiven Brillenglas die Refraktionsabweichung, die als

$$\delta R = (S'_I + S'_{II})/2 - (sph + 1/2\ cyl)$$

definiert ist, für Augenauslenkungen bis 40° negativ bleibt, während sich bei der Kombination einer üblichen progressiven Fläche mit einem herkömmlichen Torus bereits bei vergleichsweise kleinen Augenauslenkungen positive Werte für die Refraktionsabweichung ergeben, die nicht durch Akkommodation kompensiert werden können.

Mit dem erfindungsgemäßen Konzept für die astigmatische Fläche erhält man progressive Brillengläser, die nicht nur im Fernteil, sondern auch im Nahteil größere für das klare Sehen geeignete Bereiche aufweisen als mit herkömmlichen torischen Flächen versehene progressive Brillengläser, und zwar auch dann, wenn die Ebenen der beiden Hauptschnitte der Fläche mit astigmatischer Wirkung Symmetrieebenen sind (Anspruch 3), also die Fläche mit astigmatischer Wirkung im Fernteil und Nahteil gleich ausgebildet ist. Dies erlaubt es, die Fläche mit astig-matischer Wirkung unter Zugrundelegung einer Gegenfläche mit nahezu konstanter Wirkung, also beispielsweise einer sphärischen Fläche oder eines asphärischen Einstärkenglases zu optimieren. Diese bei der Optimierung verwendete Fläche ist so zu wählen, daß ihre Wirkung der Wirkung eines Bereichs mit nahezu konstanter Wirkung der Fläche mit variierendem Flächenbrechwert, also beispielsweise der Fernteilwirkung entspricht (Anspruch 8).

Eine weitere Verbesserung erhält man dann, wenn die Ebene eines Hauptschnitts der Fläche mit astigmatischer Wirkung keine Symmetrieebene ist (Anspruch 9). Bei einer derartigen Ausbildung ist es im Optimierungsprozeß möglich, die Durchblickstellen in Fern- und Nahbereich stärker zu gewichten als im seitlichen Bereich, so daß man größere für das deutliche Sehen geeignete Bereiche erhält, ohne daß die universelle Verwendbarkeit der erfindungsgemäß berechneten astigmatischen Fläche aufgehoben wäre. Eine Weiterbildung dieses Prinzips ist im Anspruch 10 angegeben:

Gemäß diesem Anspruch werden bei der Optimierung längs der Blickkegel die Durchblickstellen im Fern- und Nahbereich getrenntáentsprechend der jeweiligen Sehentfernung berücksichtigt.

## Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:

Fig. 1a-1c     die Isolinien des astigmatischen Fehlers für die Kombination eines bekannten Progressivglases mit einem ringförmigen Torus für die Achslagen 0°, 45° und 90°,

Fig. 2a-2c     die Isolinien des astigmatischen Fehlers für die Kombination einer bekannten progressiven Fläche mit einer erfindungsgemäß ausgebildeten Fläche mit astigmatischer Wirkung für die Achslagen 0°, 45° und 90°,

Fig. 3      die Pfeilhöhen der in Figur 2 verwendeten Fläche mit astigmatischer Wirkung.

## Beschreibung von Ausführungsbeispielen

Bei den folgenden Ausführungsbeispielen wird als progressive Fläche eine progressive Fläche verwendet, wie sie von den Optischen Werken G. Rodenstock, 8000 München 5 unter der Bezeichnung "Progressiv S" hergestellt und vertrieben wird. Insbesondere wird eine Fläche mit der "Basiskurve 5" und der "Addition 1,0 dpt" verwendet. Der Flächenbrechwert dieser Fläche im Fernteil beträgt bei einem Brechungsindex n=1,604 5,83 dpt. Weiterhin ist die Mittendicke der Brillengläser immer $d_M$=4,8 mm.

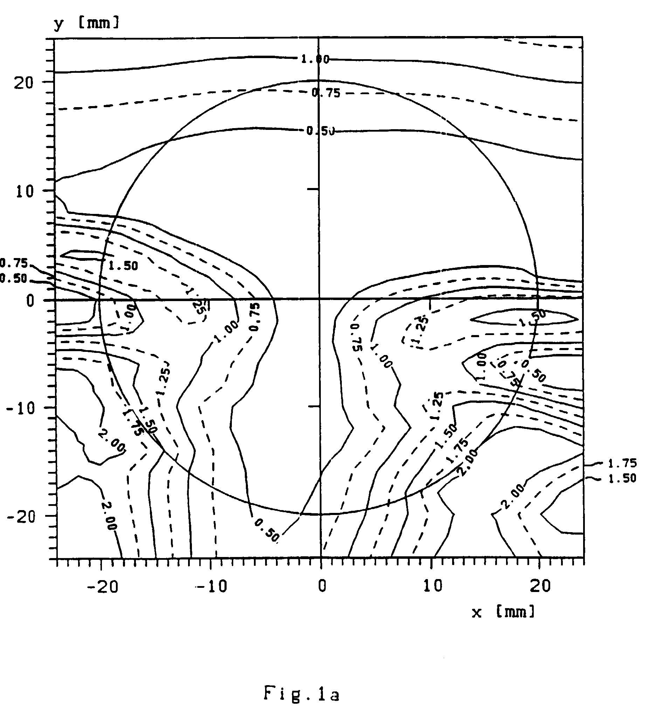

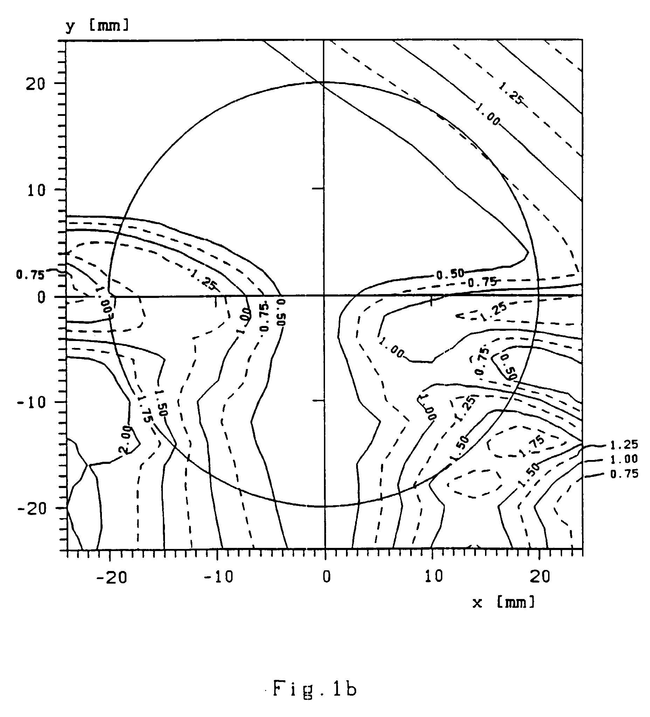

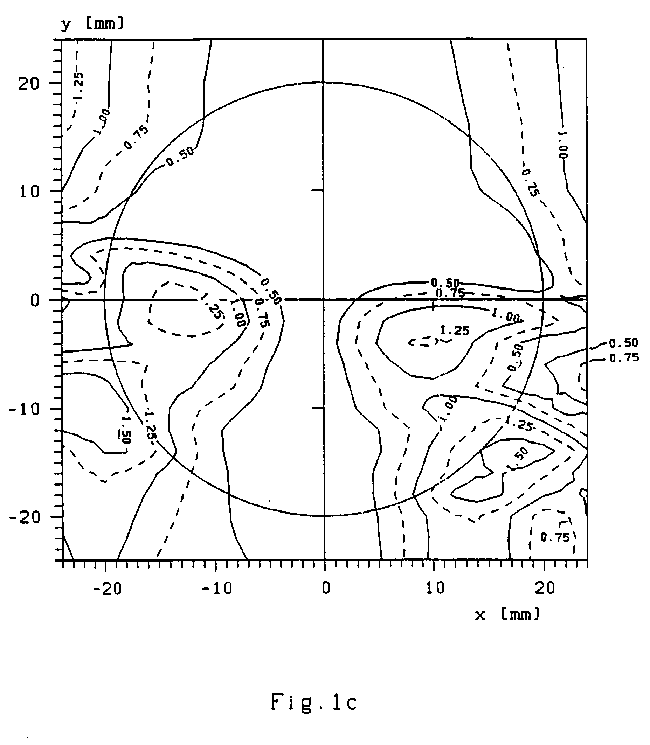

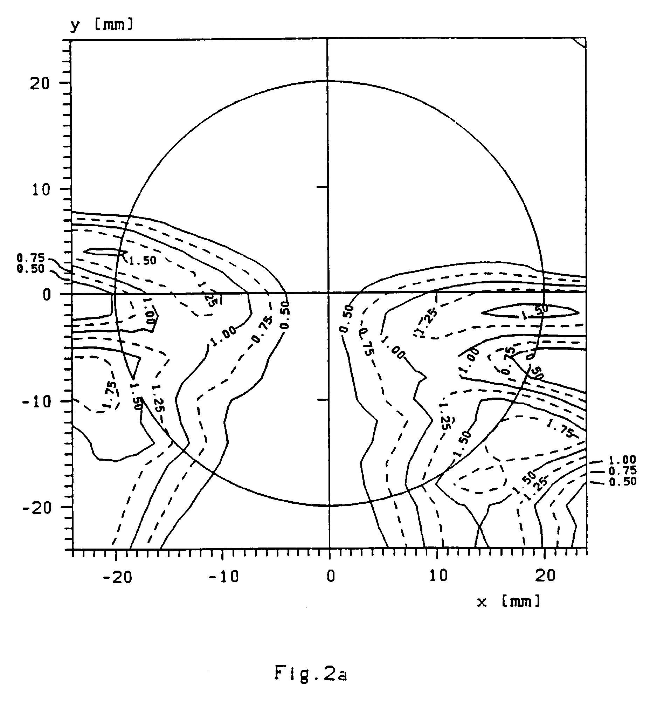

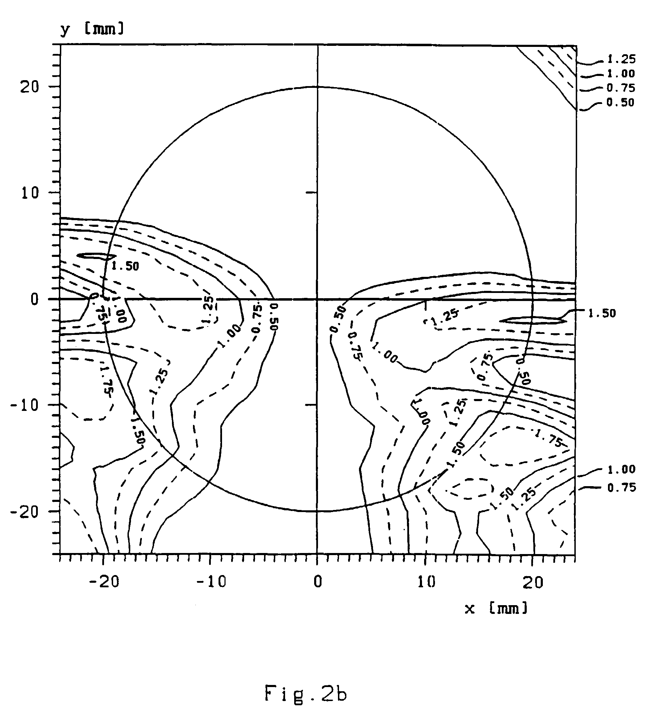

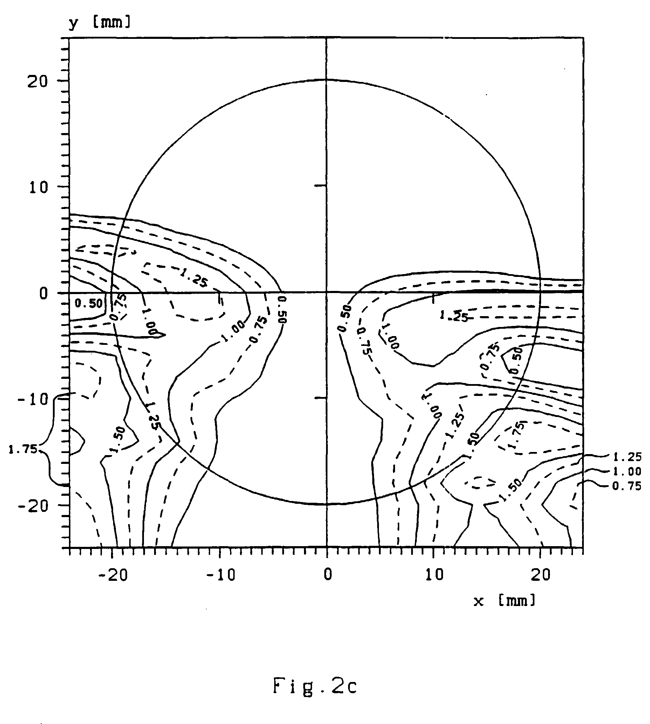

In den Figuren 1 und 2 ist jeweils die astigmatische Abweichung, d.h. die Abweichung der astigmatischen Wirkung von der verordneten astigmatischen Wirkung in Form von Isolinien (Linien gleicher astigmatischer Abweichung) in einer x/y-Ebene (Einheit: mm) aufgetragen. Die Koordinaten x und y beziehen sich dabei auf die sog. Gebrauchsstellung des Brillenglases. In der Gebrauchsstellung ist beispielsweise bei Verwendung einer symmetrischen progressiven Fläche diese in bekannter Weise so gegenüber der Vertikalen verschwenkt, daß der Hauptmeridian mit einem Winkel von 8° bis 10° gegenüber der Vertikalen zur Nase hin verläuft.

Zur Ermittlung der astigmatischen Abweichung vom verordneten Wert ist das System "Brillenglas/Auge" betrachtet worden, d.h. die resultierende astigmatische Wirkung ist nach der Methode der schiefgekreuzten Zylinder berechnet worden. Ferner ist die Gültigkeit der sog. Listingschen Regel für Augendrehungen unterstellt worden. Selbstverständlich ist es aber auch möglich, Augendrehungen nach anderen Modellen zu berücksichtigen.

Die Figuren 1a bis 1c zeigen, wie die in Gebrauchsstellung sich ergebenden Isolinien für den astigmatischen Fehler für die Kombination der vorstehend beschriebenen progressiven Fläche mit einem ringförmigen Torus, der in einem Hauptschnitt einen Flächenbrechwert von -2,43 dpt und in dem anderen Hauptschnitt einen Flächenbrechwert von -3,93 dpt und damit eine Zylinderwirkung von (etwa) 1,5 dpt hat.

Insbesondere zeigt Figur 1a die Isolinien für die Achslage 0°, Figur 1b die Isolinien für die Achslage 45° und Figur 1c die Isolinien für die Achslage 90°.

Die Figur 2a bis 2c zeigen zum Vergleich die Isolinien des astigmatischen Fehlers, der sich bei Verwendung derselben progressiven Fläche und einer erfindungsgemäß ausgebildeten Asphäre mit astigmatischer Wirkung ergibt. Die Optimierung der Fläche mit astigmatischer Wirkung ist dabei für die Achslage 0°, die Fernteilwirkung der progressiven Fläche und die Obiektentfernung "unendlich" ausgeführt.

Wie die Figuren 2a bis 2c zeigen, ergibt sich auch für die Achslagen 45° (Figur 2b) und 90° (Figur 2c) ein nur unwesentlich kleineres Sichtfeld als für die Achslage 0° (Figur 2a). Dabei ist besonders bemerkenswert, daß sich im Fernteil - anders als bei Verwendung einer torusförmigen astigmatischen Fläche - bei Verdrehung der astigmatischen Fläche relativ zur progressiven Fläche praktisch keine Änderung des durch die Isolinie 0,5 dpt des astigmatischen Fehlers begrenzten Feldes ergibt. Auch im Nahteil ist die Änderung des durch die Isolinie 0,5 dpt begrenzten Feldes wesentlich geringer als die Änderung bei Verwendung eines Torus als astigmatischer Fläche.

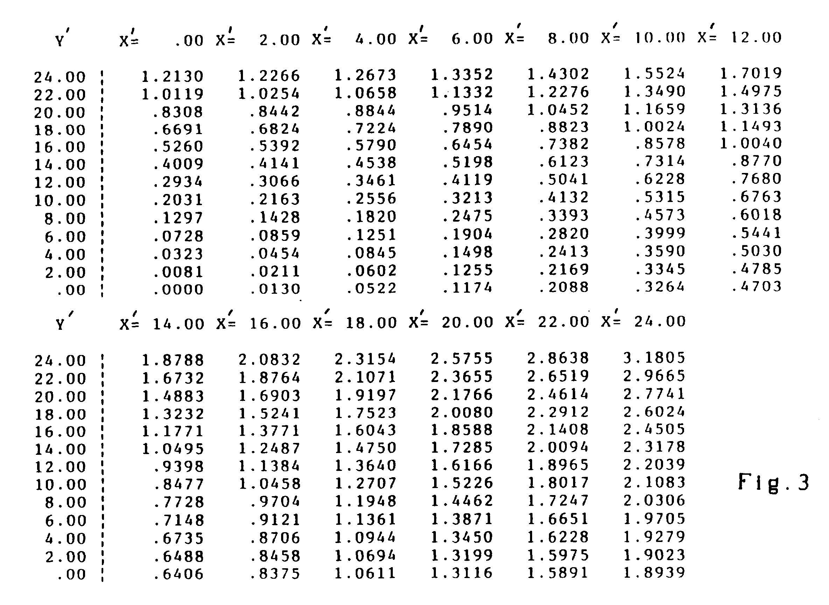

Figur 3 zeigt die Pfeilhöhen der in den Figuren 2 verwendeten, erfindungsgemäß ausgebildeten Fläche mit zwei Symmetrie-Ebenen. Unter Pfeilhöhe wird dabei der Abstand eines Punktes mit den Koordinaten x' und y' von einer Ebene verstanden, die die astigmatische Fläche im Scheitel berührt. Anders als in den Figuren 1 und 2 ist das Koordinatensystem x' und y' hier kein auf die Gebrauchsstellung bezogenes System, sondern ein Koordinatensystem, dessen x- und y-Achse in den Symmetrieebenen der astigmatischen Fläche liegen. Deshalb ist die Angabe der Pfeilhöhen eines Quadranten, nämlich des Quadranten mit den Koordinaten x'=0..24 und y'=0..24 (mm) ausreichend.

Vorstehend ist die Erfindung anhand eines Ausführungsbeispiels ohne Beschränkung des allgemeinen Erfindungsgedankens beschrieben worden. Insbesondere ist es möglich, die erfindungsgemägen Grundgedanken auf astigmatische Flächen zu übertragen, die nur eine oder keine Symmetrieebene aufweisen.

## Patentansprüche

1. Brillenglas zur Korrektur eines astigmatischen Fehlers eines Auges mit einer von 0° abweicht den Achslage mit einer Vorderfläche und einer augenseitigen Fläche, von denen

- die eine Fläche eine progressive Fläche mit wenigstens einem Bereich, in dem der Flächenbrechwert bis auf asphärische Korrekturen annähernd konstant ist, und wenigstens einem Übergangsbereich ist, der sich an den Bereich mit annähernd konstantem Flächenbrechwert anschließt, und in dem der Flächenbrechwert kontinuierlich ansteigt oder abnimmt, und
- die andere Fläche eine Fläche mit einer astigmatische Wirkung ist, wobei die Orientierung der Fläche mit astigmatischer Wirkung relativ zur progressiven Fläche von der Lage der Achse des Augen-Astigmatismus abhängt,

dadurch gekennzeichnet, daß die astigmatische Fläche wenigstens einen von der Kreisform abweichenden Hauptschnitt aufweist und für diese progressive Fläche und die Achslage 0° berechnet ist, so daß das durch die Isolinie 0,5 dpt des astigmatischen Fehlers begrenzte Sichtfeld bei von 0° abweichenden Achslagen praktisch nicht ändert, und daß diese astigmatische Fläche für von 0° abweichende Achslagen entsprechend gegenüber der progressiven Fläche verdreht ist.

2. Brillenglas nach Anspruch 1,
dadurch **gekennzeichnet**, daß kein Schnitt der Fläche mit astigmatischer Wirkung, der durch den Scheitelpunkt verläuft, eine kreisförmige Form hat.

3. Brillenglas nach Ansprüch 1 oder 2,
dadurch **gekennzeichnet**, daß beide Hauptschnitte der Fläche mit astigmatischer Wirkung Symmetrieebenen sind.

4. Brillenglas nach einem der Ansprüche 1 bis 3,
dadurch **gekennzeichnet**, daß wenigstens die Ebene eines Hauptschnitts der Fläche mit astigmatischer Wirkung keine Symmetrieebene ist.

5. Verfähren zum Berechnen eines Brillenglases, das zur Korrektur eines astigmatischen Fehlers eines Auges dient,
mit einer Vorderfläche und einer augenseitigen Fläche, von denen

- die eine Fläche eine progressive Fläche mit wenigstens einem Bereich, in dem der Flächenbrechwert bis auf asphärische Korrekturen annähernd konstant ist, und wenigstens einem Übergangsbereich ist, der sich an den Bereich mit annähernd konstantem Flächenbrechwert anschließt, und in dem der Flächenbrechwert kontinuierlich ansteigt oder abnimmt, und
- die andere Fläche eine astigmatische Fläche mit einer astigmatischen Wirkung ist, wobei die Orientierung der Fläche mit astigmatischer Wirkung relativ zur progressiven von der Lage der Achse des Augen-Astigmatismus abhängt,

dadurch **gekennzeichnet**, daß unabhängig von der tatsächlichen Achslage des Auges als astigmatische Fläche eine Fläche berechnet wird, die wenigstens einen Hauptschnitt aufweist, dessen Form derart von der Kreisform abweicht, und deren Flächengestaltung für das System „Brillenglas/Auge" und eine bestimmte progressive Fläche durch eine Optimierungsrechnung berechnet wird, bei der die Achslage 0° ist, und daß die für die Achslage 0° berechnete astigmatische Fläche beim Einsatz für andere Achslagen lediglich entsprechend relativ zur progressiven Fläche gedreht wird.

6. Verfahren nach Anspruch 5,
dadurch **gekennzeichnet**, daß die Fläche mit astigmatischer Wirkung für zwei Blickkegel optimiert wird.

7. Verfahren nach Anspruch 6,
dadurch **gekennzeichnet**, daß der eine Blickkegel einer Blickauslenkung von ca 15-20° und der andere Blickkegel einer Blickauslenkung von ca. 30-40° entspricht.

8. Verfahrens nach einem der Ansprüche 5 bis 7,
dadurch **gekennzeichnet**, daß die Fläche mit astigmatischer Wirkung unter Zugrundelegung einer Gegenfläche mit nahezu konstanter Wirkung optimiert ist, deren Wirkung der Wirkung eines Bereichs mit nahezu konstanter Wirkung der Fläche mit variierendem Flächenbrechwert entspricht.

9. Verfahren nach einem der Ansprüche 5 bis 7, bei dem die Fläche mit kontinuierlicher Flächenbrechwert-Änderung in ihrem oberen Bereich einen für das Sehen in die Ferne oder Nähe geeigneten Bereich und in ihrem unteren Bereich einen für das Sehen in die Nähe oder Ferne geeigneten Bereich und zwischen diesen Bereichen den Bereich mit kontinuierlicher Flächenbrechwert-Änderung aufweist,
dadurch **gekennzeichnet**, daß bei der Optimierung längs der Blickkegel die Durchblickstellen im Fern- und Nahbereich stärker gewichtet sind als im seitlichen Bereich.

10. Verfahren nach Anspruch 9, bei dem die Fläche mit kontinuierlicher Flächenbrechwert-Änderung in ihrem oberen Bereich einen für das Sehen in die Ferne oder Nähe geeigneten Bereich und in ihrem unteren Bereich einen für das Sehen in die Nähe oder Ferne geeigneten Bereich und zwischen diesen Bereichen den Bereich mit kontinuierlicher Flächenbrechwert-Änderung aufweist,
dadurch **gekennzeichnet**, daß bei der Optimierung längs der Blickkegel die Durchblickstellen im Fern- und Nahbereich getrennt entsprechend der jeweiligen Sehentfernung berücksichtigt werden.

**Claims**

1. Spectacle lens for correcting an astigmatic defect of an eye having an axis position different from 0°, comprising a face and a surface on the eye side, whereof

- one surface is a progressive surface including least one zone where the surface power is approximately constant, with the exception of aspheric corrections, and at least one transitional zone joining said zone of approximately constant surface power, where the surface power increases or decreases continuously, and

- the other surface is a surface producing an astigmatic effect, with the orientation of said surface which produces an astigmatic effect, relative to said progressive surface, being dependent on the position of the astigmatism axis of the eye,

**characterised** in that the astigmatic surface comprises at least one principal section varying from the circular shape, whilst it is calculated for this progressive surface and the position of the 0° axis, such that the angle of view, which is limited by the iso 0,5 dpt line of the astigmatic defect, will practically not vary in the event of axis positions different from 0°, and that this astigmatic surface is turned correspondingly relative to the progressive surface in the event of axis positions different from 0°.

2. Spectacle lens according to Claim 1, **characterised** in that no section of the surface producing an astigmatic effect, which passes through the apex, presents a circular shape.

3. Spectacle lens according to any of the Claims 1 or 2, **characterised** in that said two principal sections of said surface producing an astigmatic effect are planes of symmetry.

4. Spectacle lens according to any of the Claims 1 to 3, **characterised** in that at least the plane of a principal section of said surface producing an astigmatic effect is not a plane of symmetry.

5. Method of computing a spectacle lens serving to correct an astigmatic defect of an eye, and comprising a face and a surface on the eye side, whereof

- one surface is a progressive surface including least one zone where the surface power is approximately constant, with the exception of aspheric corrections, and at least one transitional zone joining said zone of approximately constant surface power, where the surface power increases or decreases continuously, and

- the other surface is a surface producing an astigmatic effect, with the orientation of said surface which produces an astigmatic effect, relative to said progressive surface, being dependent on the position of the astigmatism axis of the eye,

**characterised** in that independently of the actual position of the eye axis, a surface is computed as astigmatic surface which presents at least one principal section having a shape varying from the circular shape and having a surface configuration for the "spectacle lens/eye system" and for a progressive surface determined by an optimising computation for an axis position of 0°, and in that the astigmatic surface computed for the axis position of 0° is turned relative to the progressive surface only when the astigmatic surface computed for the axis position of 0° is turned relative to the progressive surface only when it is employed for other axis positions.

6. Method according to Claim 5, **characterised** in that said surface producing an astigmatic effect is optimised for two cones of view.

7. Method according to Claim 6, **characterised** in that one of said cones of view corresponds to an excursion of view by 15 to 20° approximately whilst the other cone of view corresponds to an excursion of view by 30 to 40° approximately.

8. Method according to any of the Claims 5 to 7, **characterised** in that said surface producing an astigmatic effect is optimised on the basis of an opposite surface producing an almost constant effect, whereof the effect corresponds to the effect bf a zone producing an almost constant effect of said surface having a varying surface power.

9. Method according to any of the Claims 5 to 7, wherein said surface having a continuously varying surface power comprises, in its upper section, an area suitable for distance vision or near-seeing vision and, in its lower section, an area suitable for near-seeing or distance vision, and the zone of continuously varying surface power between these areas, **characterised** in that in optimisation along said cones of view the viewing aperture sites in said distance vision and near-seeing vision areas are weighted more strongly than the sites in the lateral area.

10. Method according to Claim 9, wherein said surface having a continuously varying surface power comprises, in its upper section, an area suitable for distance vision or near-seeing vision and, in its lower section, an area suitable for near-seeing or distance vision, and the zone of continuously varying surface power between these areas, **characterised** in that in optimisation along said cones of view the viewing aperture sits in said distance vision and near-seeing vision areas are considered separately in correspondence with the respective distance of vision.

## Revendications

1. Verre de lunettes à corriger un défaut astigmatique d'un oeil à une position de l'axe en variance de 0°, comprenant une face avant et une face du côté de l'oeil, dont

   - l'une surface est une surface progressive à au moins une zone où la puissance zonale est approximativement constante, à l'exception de corrections asphériques, et à au moins une zone de transition, qui est jointe à ladite zone à puissance zonale approximativement constante, où la puissance zonale s'augmente ou décroît en continu, et
   - l'autre surface est une face à effet astigmatique, à l'orientation de la face à effet astigmatique, relativement à la face progressive, faisant fonction de la position de l'axe de l'astigmatisme de l'oeil,

   **caractérisé** en ce que la face astigmatique présente au moins une section principale en variance de la forme circulaire, en étant calculée pour cette face progressive et la position de l'axe de 0°, de façon que le champ visuel, qui est limité par la ligne iso 0,5 dpt du défaut astigmatique, ne subisse pratiquement aucune variation au cas de positions de l'axe en variance de 0°, et en ce que cette face astigmatique est tournée en correspondance relativement à la face progressive au cas de positions de l'axe en variance de 0°.

2. Verre de lunettes selon la revendication 1, **caractérisé** en ce qu'aucune section de ladite face à effet astigmatique, qui passe par l'apex, ne présente pas une forme circulaire.

3. Verre de lunettes selon une quelconque des revendications 1 ou 2, **caractérisé** en ce que les deux sections principales de ladite face à effet astigmatique sont des plans de symétrie.

4. Verre de lunettes selon une quelconque des revendications 1 à 3, **caractérisé** en ce qu'au moins le plan d'une section principale de ladite face à effet astigmatique n'est pas un plan de symétrie.

5. Procédé à calculer un verre de lunettes servant à corriger un défaut astigmatique d'un oeil et comprenant une face avant et une face du côté de l'oeil, dont

   - l'une surface est une face progressive à au moins une zona où la puissance zonale est approximativement constante, à l'exception de corrections asphériques, et à au moins une zone de transition, qui est jointe à ladite zone à puissance zonale approximativement constante, où la puissance zonale s'augmente ou décroît en continu, et
   - l'autre surface est une face à effet astigmatique, à l'orientation de la face à effet astigmatique, relativement à la face progressive, faisant fonction de la position de l'axe de l'astigmatisme de l'oeil,

   **caractérisé** en ce qu'indépendamment de la position réelle de l'axe de l'oeil, on calcule, en tant que face astigmatique, une face présentant au moins une section principale dont la forme varie de la forme circulaire et dont la configuration de surface pour le système "verre de lunettes/ oeil" et pour une face progressive déterminée par un calcul d'optimisation auquel la position de l'axe est 0°,

   et en ce que la face astigmatique calculée pour la position de l'axe 0° est seulement tournée relativement à la face progressive quand elle est employée pour des autres positions de l'axe.

6. Procédé selon la revendication 5, **caractérisé** en ce que ladite face à effet astigmatique est optimisée pour deux cônes de vue.

7. Procédé selon la revendication 6, **caractérisé** en ce que l'un desdits cônes de vue correspond à une excursion de vue par 15 à 20° environ pendant que l'autre cône de vue correspond à une excursion de vue par 30 à 40° environ.

8. Procédé selon une quelconque des revendications 5 à 7, **caractérisé** en ce que ladite face à effet astigmatique est optimisée à la base d'une contre-surface à un effet presque constant, dont l'effet correspond à l'effet d'une zone à effet presque constant de ladite face à puissance zonale variable.

9. Procédé selon une quelconque des revendications 5 à 7, dans lequel ladite face à variation continue de la puissance zonale comprend, dans sa partie supérieure, une zone appropriée à la vision de loin ou de près et, dans sa partie inférieure, une zone appropriée à la vision de près ou de loin, et la zone à variation en continue de la puissance zonale entre ces zones, **caractérisé** en ce qu'à l'optimisation le long desdits cônes de vue, les endroits de traversée du regard dans ladite zone de vision de loin et de prés subis-

EP 0 626 075 B1

sent une pondérisation plus forte que les endroits dans la zone latérale.

**10.** Procédé selon la revendication 9, dans lequel ladite face à variation en continu de la puissance zonale comprend, dans sa partie supérieure, une zone appropriée à la vision de loin ou de près et, dans sa partie inférieure, une zone appropriée à la vision de prés ou de loin, et la zone à variation en continue de la puissance zonale entre ces zones, **caractérisé** en ce qu'à l'optimisation le long desdits cônes de vue, les endroits de traversée du regard dans ladite zone de vision de loin et de près sont considérés séparément en correspondance avec la distance respective de vision.

Fig.1a

Fig.1b

Fig.1c

Fig.2a

Fig.2b

Fig.2c

EP 0 626 075 B1

| Y' | X'= .00 | X'= 2.00 | X'= 4.00 | X'= 6.00 | X'= 8.00 | X'= 10.00 | X'= 12.00 |
|---|---|---|---|---|---|---|---|
| 24.00 | 1.2130 | 1.2266 | 1.2673 | 1.3352 | 1.4302 | 1.5524 | 1.7019 |
| 22.00 | 1.0119 | 1.0254 | 1.0658 | 1.1332 | 1.2276 | 1.3490 | 1.4975 |
| 20.00 | .8308 | .8442 | .8844 | .9514 | 1.0452 | 1.1659 | 1.3136 |
| 18.00 | .6691 | .6824 | .7224 | .7890 | .8823 | 1.0024 | 1.1493 |
| 16.00 | .5260 | .5392 | .5790 | .6454 | .7382 | .8578 | 1.0040 |
| 14.00 | .4009 | .4141 | .4538 | .5198 | .6123 | .7314 | .8770 |
| 12.00 | .2934 | .3066 | .3461 | .4119 | .5041 | .6228 | .7680 |
| 10.00 | .2031 | .2163 | .2556 | .3213 | .4132 | .5315 | .6763 |
| 8.00 | .1297 | .1428 | .1820 | .2475 | .3393 | .4573 | .6018 |
| 6.00 | .0728 | .0859 | .1251 | .1904 | .2820 | .3999 | .5441 |
| 4.00 | .0323 | .0454 | .0845 | .1498 | .2413 | .3590 | .5030 |
| 2.00 | .0081 | .0211 | .0602 | .1255 | .2169 | .3345 | .4785 |
| .00 | .0000 | .0130 | .0522 | .1174 | .2088 | .3264 | .4703 |

| Y' | X'= 14.00 | X'= 16.00 | X'= 18.00 | X'= 20.00 | X'= 22.00 | X'= 24.00 |
|---|---|---|---|---|---|---|
| 24.00 | 1.8788 | 2.0832 | 2.3154 | 2.5755 | 2.8638 | 3.1805 |
| 22.00 | 1.6732 | 1.8764 | 2.1071 | 2.3655 | 2.6519 | 2.9665 |
| 20.00 | 1.4883 | 1.6903 | 1.9197 | 2.1766 | 2.4614 | 2.7741 |
| 18.00 | 1.3232 | 1.5241 | 1.7523 | 2.0080 | 2.2912 | 2.6024 |
| 16.00 | 1.1771 | 1.3771 | 1.6043 | 1.8588 | 2.1408 | 2.4505 |
| 14.00 | 1.0495 | 1.2487 | 1.4750 | 1.7285 | 2.0094 | 2.3178 |
| 12.00 | .9398 | 1.1384 | 1.3640 | 1.6166 | 1.8965 | 2.2039 |
| 10.00 | .8477 | 1.0458 | 1.2707 | 1.5226 | 1.8017 | 2.1083 |
| 8.00 | .7728 | .9704 | 1.1948 | 1.4462 | 1.7247 | 2.0306 |
| 6.00 | .7148 | .9121 | 1.1361 | 1.3871 | 1.6651 | 1.9705 |
| 4.00 | .6735 | .8706 | 1.0944 | 1.3450 | 1.6228 | 1.9279 |
| 2.00 | .6488 | .8458 | 1.0694 | 1.3199 | 1.5975 | 1.9023 |
| .00 | .6406 | .8375 | 1.0611 | 1.3116 | 1.5891 | 1.8939 |

Fig.3